# EUROPÄISCHE PATENTSCHRIFT

(11) **EP 0 763 439 B1**
(45) Veröffentlichungstag und Bekanntmachung des Hinweises auf die Patenterteilung: **10.05.2000**
(21) Anmeldenummer: 96112102.7
(22) Anmeldetag: 26.07.1996
(51) Int. Cl.: B60J 7/185

(54) **Verdeck für ein Fahrzeug, insbesondere Cabriolet**
Soft top for vehicle, especially for convertible
Capote pour véhicule, en particulier pour cabriolet

(30) Priorität: 13.09.1995 DE 19533802
(43) Veröffentlichungstag der Anmeldung: 19.03.1997
(73) Patentinhaber: Dr.Ing.h.c. F. Porsche Aktiengesellschaft, 70435 Stuttgart (DE)
(72) Erfinder: Kleinfelder, Joachim, 71229 Leonberg (DE); Armbruster, Reiner, 72275 Allpirsbach (DE); Henn, Uwe, 71299 Wimsheim (DE); Homann, Bodo, 71296 Heimsheim (DE)

(56) Entgegenhaltungen:
- DE-U- 9 302 292
- GB-A- 316 810

## Beschreibung

Die Erfindung bezieht sich auf ein Verdeck für ein Fahrzeug, insbesondere Cabriolet, gemäß dem Oberbegriff des Patentanspruchs 1.

Ein bekanntes Verdeck der eingangs genannten Gattung (DE 34 13 379 C 2) ist mittels einer Verriegelungsvorrichtung am angrenzenden Windschutzscheibenrahmen in Lage gehalten und nach Lösen der Verriegelungsvorrichtung in eine heckseitige Ablagestellung verlagerbar.
Die Verriegelungsvorrichtung umfaßt ein am vorderen Abschnitt des Verdecks angeordnetes Verriegelungsorgan mit einem Verschlußhaken sowie zumindest eine zwischen Verdeck und Windschutzscheibenrahmen wirkende Zentriereinrichtung mit am vorderen Abschnitt des Verdecks angeordneten vorstehenden Zentrierelementen. Eine Arretiereinrichtung für das abgelegte Verdeck ist dieser Schrift nicht entnehmbar.

Aus der DE-PS 706 443 geht eine Arretiereinrichtung für das zurückgeklappte Verdeck hervor, die sich aus einem am obersten Verdeckspriegel angeordneten, gabelförmig ausgeschnittenen Daumen, einem am darunterliegenden Spriegel unter der Wirkung einer Feder stehendem Drehriegel und einem am Wagenkasten angebrachten Schließblech zur Aufnahme des Kopfes des Drehriegels zusammensetzt. Bei dieser Anordnung werden die übereinanderliegenden Spriegel des Verdecks gegeneinander und gegen den Wagenkasten gespannt, so daß im Fahrbetrieb bei geöffnetem Verdeck sowohl Hub- und Senk- als auch Seitenbewegungen der Spriegel verhindert werden. Diese Arretiereinrichtung setzt sich aus einer Vielzahl von Bauteilen zusammen und weist einen aufwendigen Aufbau auf.

Aufgabe der Erfindung ist es, für ein in die heckseitige Ablagestellung zurückgeklapptes Verdeck eine eine gute Funktion aufweisende Arretiereinrichtung zu schaffen, die einen einfachen Aufbau aufweist und kostengünstig herstellbar ist.

Erfindungsgemäß wird diese Aufgabe durch die kennzeichnenden Merkmale des Patentanspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß die am vorderen Abschnitt des Verdecks angeordneten Bauteile der windschutzscheibenrahmenseitigen Verriegelungsvorrichtung zugleich Bauteile der heckseitigen Arretiereinrichtung bilden und somit eine Doppelfunktion ausüben. Dadurch wird der Aufbau der heckseitigen Arretiereinrichtung wesentlich vereinfacht und die Kosten werden erheblich reduziert. Eine derartige Arretiereinrichtung eignet sich insbesondere für eine Verdeckkonstruktion, bei der der vordere Abschnitt des Verdecks mittels einer Lenkeranordnung dergestalt in den Heckbereich verlagert wird, daß die Oberseite des vorderen Abschnitts auch in zurückgeklappter Ablagestellung die Oberseite bildet.

Im Ausführungsbeispiel bilden die beiden seitlich außenliegenden, nach vorne ragenden Zentrierelemente und das mittig angeordnete Verriegelungsorgan mit dem Verschlußhaken Funktionsteile der heckseitigen Arretiereinrichtung, so daß aufbauseitig lediglich ein federbelasteter mittiger Sperriegel und zwei Gegenlager für die Zentrierelemente vorgesehen werden müssen. Diese Bauteile sind jedoch einfach und kostengünstig herstellbar.
Der Verschlußhaken weist eine zusätzlich angeformte vorstehende Nase auf, die in Ablagestellung des Verdecks mit dem federbelasteten, schwenkbaren Sperriegel verrastend zusammenwirkt, wodurch ein nach oben Bewegen des Verdecks im Fahrbetrieb vermieden wird. Die seitlich außenliegenden aufbauseitigen Gegenlager wirken in Ablagestellung des Verdecks mit den schräg nach vorne gerichteten Zentrierelementen zusammen und fixieren das abgelegte Verdeck in Querrichtung und nach unten hin. Das Federelement wirkt entgegen dem Uhrzeigersinn und versucht, den Sperriegel nach vorne in Fahrtrichtung zu verschwenken. Ein am Tragrahmen vorgesehener Anschlag begrenzt die Schwenkbewegung nach vorne.

Ein Ausführungsbeispiel der Erfindung ist in der Zeichnung dargestellt und wird im folgenden näher beschrieben.

Es zeigt
- Fig. 1: eine perspektivische Teilansicht von schräg hinten auf ein Fahrzeug mit einem Verdeck in Schließstellung A,
- Fig. 2: eine perspektivische Teilansicht von schräg hinten auf das Verdeck in Ablagestellung B,
- Fig. 3: einen Schnitt nach der Linie III-III der Fig. 2 in größerem Maßstab mit der erfindungsgemäßen Arretiereinrichtung,
- Fig. 4: einen Schnitt nach der Linie IV-IV der Fig. 2 in größerem Maßstab mit der erfindungsgemäßen Arretiereinrichtung,
- Fig. 5: einen Schnitt nach der Linie V-V der Fig. 4 und
- Fig. 6: eine Ansicht in Pfeilrichtung R auf den am Tragrahmen befestigten Sperriegel.

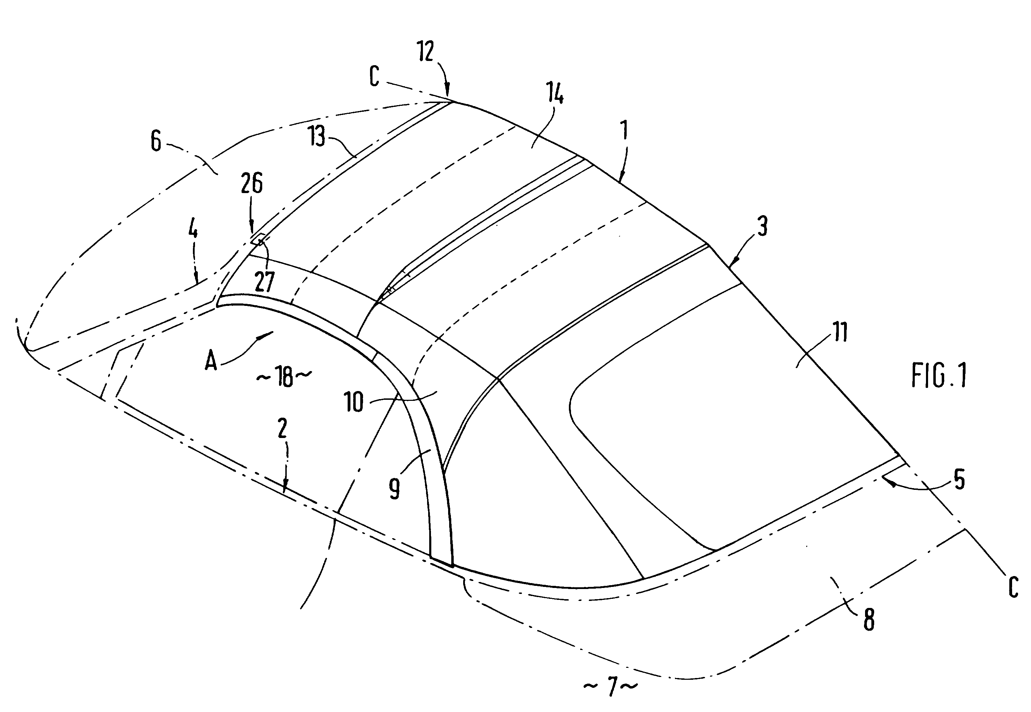

Fig. 1 zeigt einen Teilbereich eines Personenkraftwagens 1, der oberhalb einer Gürtellinie 2 ein Verdeck 3 aufweist. Das Verdeck 3 erstreckt sich in eine Schließstellung A zwischen einem Windschutzscheibenrahmen 4 und einem Heckbereich 5. Der Windschutzscheibenrahmen 4 nimmt eine Windschutzscheibe 6 auf. Im Heckbereich 5 ist ein Verdeckkasten 7 vorgesehen, der zumindest bereichsweise durch einen Verdeckkastendeckel 8 nach oben hin abgedeckt ist. Das von einer Schließstellung A in eine heckseitige Ablagestellung B und umgekehrt verlagerbare Verdeck 3 wird im Ausführungsbeispiel durch ein Faltverdeck gebildet, das sich aus einem Verdeckgestell 9 und einem am Verdeckgestell 9 in Lage gehaltenen Verdeckbezug 10 zusammensetzt.
Im hinteren Bereich des Verdeckbezuges 10 ist eine Sichtscheibe 11 vorgesehen, die durch eine flexible oder starre Heckscheibe gebildet wird.

Das Verdeck 3 ist mittels einer lösbaren Verriegelungseinrichtung 12 am oberen, querverlaufenden Bereich 13 des Windschutzscheibenrahmens 4 in seiner Schließstellung A in Lage gehalten.

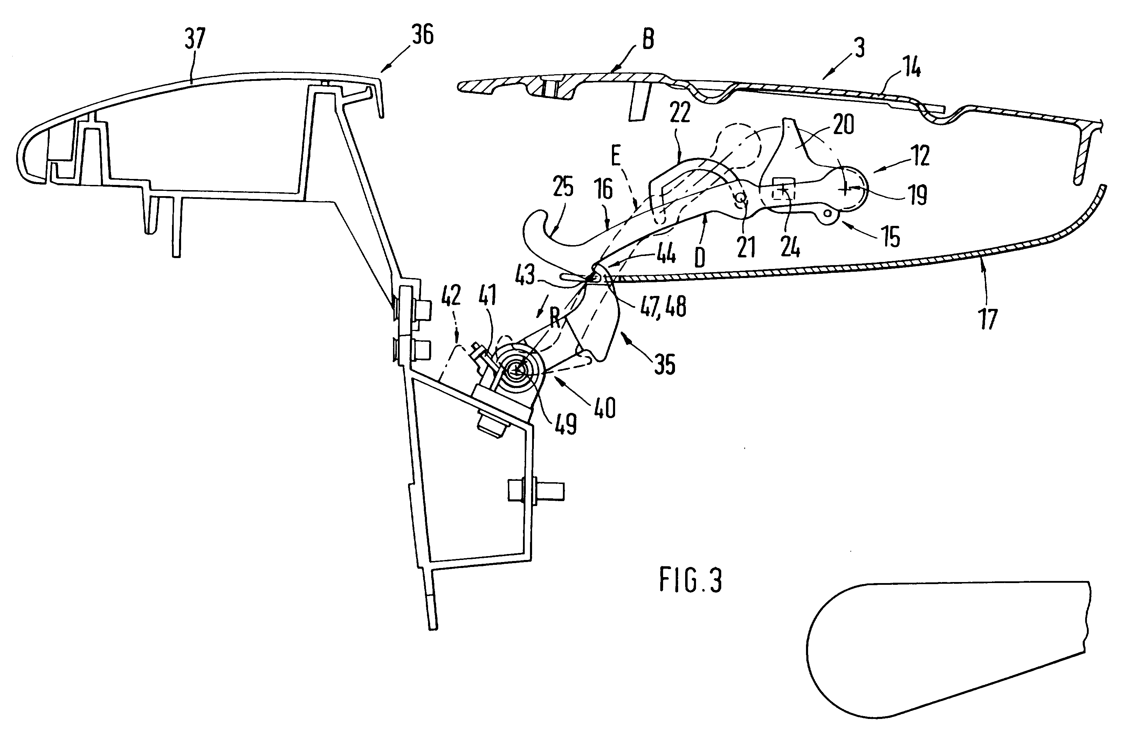

Die Verriegelungsvorrichtung 12 umfaßt zumindest ein im Ausführungsbeispiel im Bereich einer Fahrzeugmittellängsebene C-C an einem vorderen formsteifen Verdeckabschnitt 14 des Verdecks 3 angeordnetes Verriegelungsorgan 15, wobei ein motorisch angetriebener Verschlußhaken 16 des Verriegelungsorgans 15 mit einer am Windschutzscheibenrahmen 4 angeordneten, nicht näher dargestellten Aufnahme in Schließstellung A in Wirkverbindung steht. Das Verriegelungsorgan 15 wird mittels eines nicht näher dargestellten Betätigungsschalters vom Fahrgastraum 18 aus angesteuert. Gemäß Fig. 3 ist das Verriegelungsorgan 15 zum Fahrgastraum 18 hin zumindest abschnittsweise durch eine Verkleidung 17 abgedeckt.

Der Verschlußhaken 16 des Verriegelungsorgans 15 wirkt an seinem hinteren Ende 19 mit einem drehbaren Nocken 20 zusammen. Ferner ist am Verschlußhaken 16 örtlich ein vorstehender Zapfen 21 angebracht, der in einer feststehenden Kulissenbahn 22 geführt ist. In der Verriegelungsstellung des Verschlußhakens 16 erstreckt sich der Zapfen 21 benachbart einem hinteren Ende der Kulissenbahn 22 (Fig. 3). Der Nocken 20 ist um den Drehpunkt 24 schwenkbar.

An dem dem Nocken 20 abgekehrten Ende weist der Verschlußhaken 16 einen Hakenabschnitt 25 auf, der in Schließstellung A des Verdecks 3 formschlüssig mit der Aufnahme des Windschutzscheibenrahmens 4 zusammenwirkt und das Verdeck 3 in Längsrichtung festlegt.

Die Verriegelungsvorrichtung 12 umfaßt ferner zwei seitlich außenliegende Zentriereinrichtungen 26. Jede Zentriereinrichtung 26 weist ein am vorderen formsteifen Verdeckabschnitt 14 angeordnetes vorstehendes Zentrierelement 27 auf, das in Schließstellung A des Verdecks 3 mit der Aufnahme des Windschutzscheibenrahmens 4 in Wirkverbindung steht.

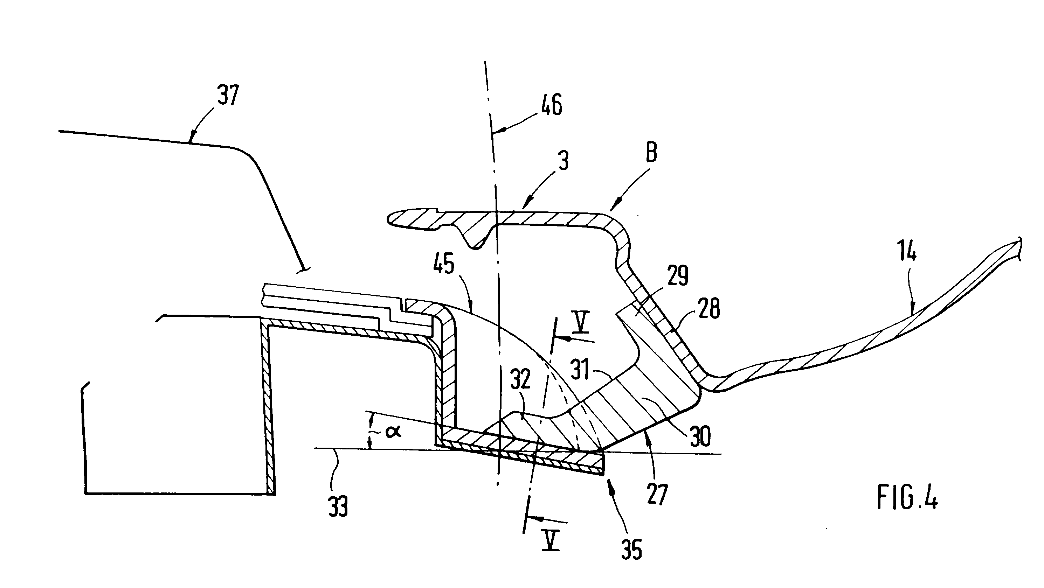

Durch die beiden Zentriereinrichtungen 26 wird das Verdeck 3 in Schließstellung A in Fahrzeugquerrichtung und in Fahrzeughöhenrichtung festgelegt.
Das Zentrierelement 27 ist mittels nicht näher dargestellter lösbarer Befestigungsschrauben an einen schräg von vorne oben nach hinten unten verlaufende Wandabschnitt 28 des großflächigen formsteifen Verdeckabschnitts 14 angeschlossen und weist im Querschnitt gesehen eine profilierte Form auf (Fig. 4). Ein Befestigungsflansch 29 des Zentrierelementes 27 liegt an der Außenseite des Wandabschnittes 28 auf. Vom Betätigungsflansch 29 ist ein erster Schenkel 30 nach vorne hin weggeführt, dessen obere Begrenzungskante 31 etwa rechtwinkelig zum Befestigungsflansch 29 ausgerichtet ist. Der erste Schenkel 30 verjüngt sich im Querschnitt gesehen nach vorne hin. An den Schenkel 30 schließt sich ein winkelig dazu verlaufender zweiter Schenkel 32 an, der gegenüber einer horizontalen Hilfsebene 33 unter einem Winkel a nach vorne oben hin ansteigt. Das Verdeckgestell 9 ist derart ausgebildet, daß der vordere formsteife Verdeckabschnitt 14 beim Verlagern des Verdecks 3 von der Schließstellung A nach hinten in die heckseitige Ablagestellung B seine Außenseite beibehält, d.h. der vordere Verdeckabschnitt wird nicht um 180° gedreht.

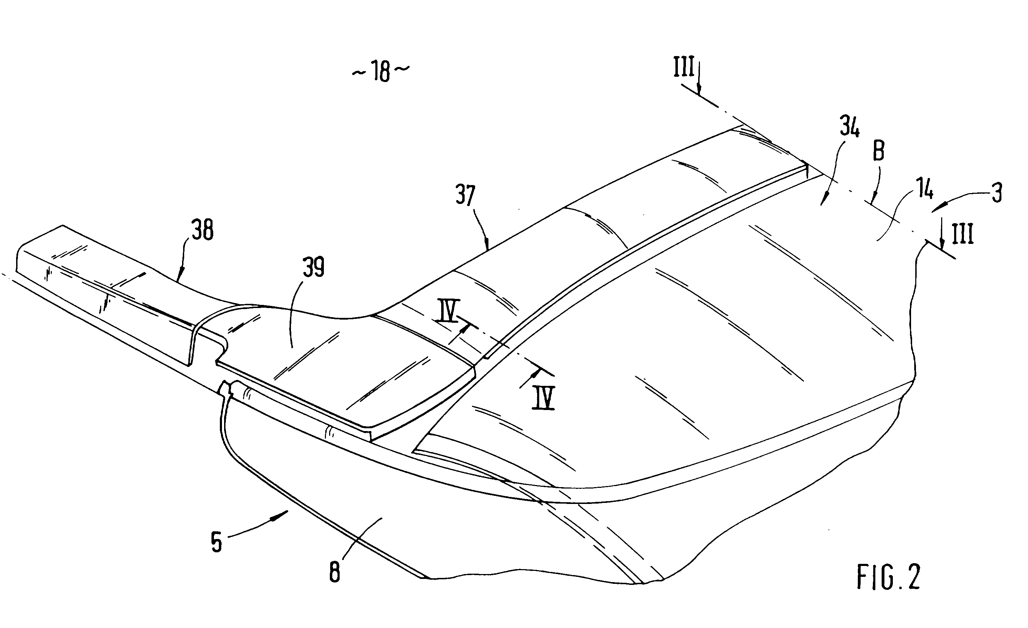

Der zurückverlagerte Verdeckabschnitt 14 bildet in der Ablagestellung B des Verdecks 3 eine dem Verdeckkastendeckel 8 vorgelagerte Abdeckung 34 des Verdeckkastens 7. Damit aufgrund der dynamischen Belastung im Fahrbetrieb das zurückgeklappte Verdeck 3 keine Hub- und Senkbwegungen sowie Seitenbewegungen ausüben kann, ist eine Arretiereinrichtung 35 vorgesehen. Erfindungsgemäß bilden das am vorderen Verdeckabschnitt 14 angeordnete Verriegelungsorgan 15 mit dem Verschlußhaken 16 und die ebenfalls am Verdeckabschnitt 14 angebrachten vorstehenden Zentrierelemente 27 zugleich Bauteile der heckseitigen Arretiereinrichtung 35. Die Gegenstücke der Arretiereinrichtung 35 zum Verschlußhaken 16 und den Zentrierelementen 27 sind an einem querverlaufenden, dem zurückgeklappten Verdeck 3 vorgelagerten aufbauseitigen Tragrahmen 36 angeordnet. Der Tragrahmen 36 ist nach oben hin durch ein querverlaufendes Verkleidungsteil 37 abgedeckt. In Fig. 2 sind ferner die Fondseitenverkleidung 38 und eine schwenkbare Klappe 39 dargestellt.

Der Verschlußhaken 16 des Verriegelungsorgans 15 steht in Ablagestellung B des Verdecks 3 in Wirkverbindung mit einem am Tragrahmen 36 angebrachten schwenkbaren Sperriegel 40, wobei der Sperriegel 40 durch ein Federelement 41 entgegen dem Uhrzeigersinn beaufschlagt ist. Ein Anschlag 42 begrenzt die Schwenkbewegung des Sperriegels 40 nach vorne hin.

Der Verschlußhaken 16 und der Sperriegel 40 sind im Ausführungsbeispiel etwa im Bereich der Fahrzeugmittellängsebene C-C angeordnet.

Am Verschlußhaken 16 ist örtlich eine vorstehende Nase 43 ausgebildet, die in Ablagestellung B des Verdecks 3 mit einem korrespondierend ausgebildeten oberen Endbereich 44 des Sperriegels 40 formschlüssig zusammenwirkt.

Die Nase 43 ist an einem unteren Endbereich des Verschlußhakens 16 vorgesehen und zwar auf der dem Hakenabschnitt 25 abgekehrten Seite. Der Endbereich 44 des Sperriegels 40 umgreift die Nase 43 des Verschlußhakens 16 und wirkt verhakend mit diesem zusammen.

Ferner sind am Tragrahmen 36 - jeweils in einem seitlich außenliegenden Bereich - muldenförmige Gegenlager 45 angeordnet, die in Ablagestellung B des Verdecks 3 mit den vorstehenden Zentrierelementen 27 in Wirkverbindung stehen. Die Zentrierelemente 27 greifen beim Absenken des Verdecks 3 in die nach oben hin offenen Gegenlager 45 ein und fixieren das Verdeck 3 in Querrichtung und nach unten hin. Beim Absenken bewegen sich das Verdeck 3 bzw. die Zentrierelemente 27 entlang einer aufrechten Kurvenbahn 46.

Durch das Zusammenwirken von Sperriegel 40 und Verschlußhaken 16 werden Verdeckbewegungen des abgelegten Verdecks 3 nach oben hin ausgeschlossen.

Die Betätigung des Verdecks 3 läuft wie folgt ab.
Durch Drücken des im Fahrgastraum 18 angeordneten Betätigungsschalters wird der motorisch angetriebene Verschlußhaken 16 von seiner Verriegelungsstellung D in eine Entriegelungsstellung E bewegt und danach das Verdeck 3 nach hinten in die heckseitige Ablagestellung B verlagert. Durch das Gewicht des zurückgeklappten Verdecks 3 legt sich der obenliegende vordere Verdeckabschnitt 14 auf die aufbauseitigen Gegenlager 45 des Tragsrahmens 36 auf, wodurch eine Festlegung des Verdecks 3 in Querrichtung und nach unten bewirkt wird. Ein an einem nicht näher dargestellten Hydraulikzylinder des Verdeckantriebs angeordneter Mikroschalter zeigt an, daß das Verdeck 3 geöffnet ist. Daraufhin läuft das Steuergerät eine Stellung weiter und der Verschlußhaken 16 wird wieder nach innen in seine Verriegelungsstellung D bewegt. Bei diesem Vorgang verhakt sich die angeformte Nase 43 des Verschlußhakens 16 mit dem korrespondierend ausgebildeten Endbereich 44 des Sperriegels 40.

Die miteinander zusammenwirkenden Anlageflächen 47, 48 von Sperriegel 40 und Nase 43 sind radienförmig ausgebildet, wobei der Mittelpunkt des Radius mit dem Drehpunkt 49 des Sperriegels 40 zusammenfällt. Dadurch wird eine einfache Notentriegelung der Arretiereinrichtung 35 gewährleistet.

Die mittige Verbindung zwischen Verschlußhaken 16 und Sperriegel 40 bewirkt, daß sich im Fahrbetrieb das abgelegte Verdeck 3 nicht nach oben bewegen kann.

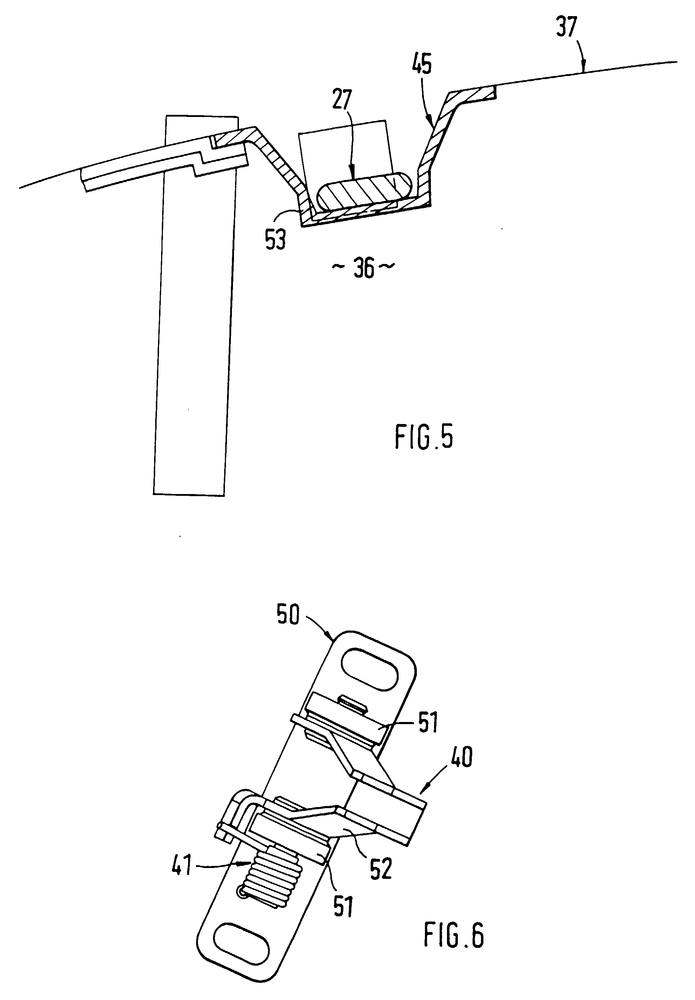

Der Sperriegel 40 umfaßt gemäß Fig. 6 eine feststehende, am Tragrahmen 36 befestigte Grundplatte 50 mit zwei aufrechten Lagerabschnitten 51, an denen das schwenkbare, federbelastete Oberteil 52 des Sperriegels 40 drehbar gelagert ist.

Fig. 5 zeigt das muldenförmige, an der Oberseite des Tragrahmens 36 angeordnete Gegenlager 45, wobei sich das Gegenlager 45 von einem dem Zentrierelement 27 angepaßten Aufnahmeabschnitt 53 aus nach oben hin trichterförmig erweitert.

## Patentansprüche

1. Verdeck für ein Fahrzeug, insbesondere Cabriolet, das mittels einer Verriegelungsvorrichtung (12) am angrenzenden Windschutzscheibenrahmen (4) in seiner Schließstellung in Lage gehalten und nach Lösen der Verriegelungsvorrichtung (12) in eine heckseitige Ablagestellung verlagerbar ist, wobei die Verriegelungsvorrichtung (12) ein an einem vorderen Verdeckabschnitt angeordnetes Verriegelungsorgan (15) mit einem Verschlußhaken (16) sowie zumindest eine zwischen Verdeck (3) und Windschutzscheibenrahmen (4) wirkende Zentriereinrichtung mit am vorderen Verdeckabschnitt angeordneten, vorstehenden Zentrierelementen (27) umfaßt, dadurch gekennzeichnet, daß das Verdeck (3) in seiner zurückgeklappten heckseitigen Ablagestellung (B) mittels einer Arretiereinrichtung (35) fixiert ist, wobei das am vorderen Verdeckabschnitt (14) angeordnete Verriegelungsorgan (15) mit dem Verschlußhaken (16) und/oder die ebenfalls am Verdeckabschnitt (14) vorgesehenen vorstehenden Zentrierelemente (27) zugleich Funktionsteile der heckseitigen Arretiereinrichtung (35) bilden.

2. Verdeck nach Anspruch 1, dadurch gekennzeichnet, daß an einem querverlaufenden dem zurückgeklappten Verdeck (3) vorgelagerten aufbauseitigen Tragrahmen (36) örtlich ein federbelasteter, schwenkbarer Sperriegel (40) angebracht ist, der mit dem Verschlußhaken (16) des Verriegelungsorgans (15) in Ablagestellung (B) des Verdecks (3) in Wirkverbindung steht.

3. Verdeck nach den Ansprüchen 1 und 2, dadurch gekennzeichnet, daß die Arretiereinrichtung (35) lediglich einen Verschlußhaken (16) und einen Sperriegel (40) umfaßt, die sich im Bereich einer Fahrzeuglängsmittelebene (C-C) des Fahrzeuges erstrecken.

4. Verdeck nach den Ansprüchen 1 bis 3, dadurch gekennzeichnet, daß am Verschlußhaken (16) örtlich eine vorstehende Nase (43) ausgebildet ist, die in Ablagestellung (B) des Verdecks (3) mit einem korrespondierend ausgebildeten oberen Endbereich (44) des Sperriegels (40) formschlüssig zusammenwirkt.

5. Verdeck nach Anspruch 4, dadurch gekennzeichnet, daß die Nase (43) an einem unteren Endbereich des Verschlußhakens (16) vorgesehen ist und zwar auf der einem Hakenabschnitt (23) des Verschlußhakens (16) abgekehrten Seite.

6. Verdeck nach den Ansprüchen 1 und 2, dadurch gekennzeichnet, daß am vorderen, formsteifen Verdeckabschnitt (14) an seitlich außenliegenden Bereichen vorstehende Zentrierelemente (27) vorgesehen sind, die in Ablagestellung (B) des Verdecks (3) mit korrespondierend ausgebildeten aufbauseitigen Gegenlagern (45) zusammenwirken.

7. Verdeck nach Anspruch 6, dadurch gekennzeichnet, daß die muldenförmigen Gegenlager (45) am querverlaufenden, aufbauseitigen Tragrahmen (36) angeordnet sind.

8. Verdeck nach einem oder mehreren der vorangegangenen Ansprüche, dadurch gekennzeichnet, daß der Verschlußhaken (16) motorisch angetrieben ist.

## Claims

1. A folding top for a vehicle, in particular a cabriolet, held in place in its closed position by means of a locking device (12) on the adjacent windscreen frame (4) and displaceable into a folded-down position at the rear after the locking device (12) is released, wherein the locking device (12) comprises a locking member (15) arranged on a front portion of the folding top and having a closure hook (16) as well as at least one centring device acting between the folding top (3) and the windscreen frame (4) and having projecting centring members (27) arranged on the front portion of the folding top, **characterized in that** the folding top (3) is fixed in its swung-back folded-down position (**B**) at the rear by means of an arresting device (35), wherein the locking member (15) arranged on the front portion (14) of the folding top together with the closure hook (16) and/or the projecting centring members (27) likewise provided on the portion (14) of the folding top at the same time form functional parts of the arresting device (35) at the rear.

2. A folding top according to Claim 1, **characterized in that** a spring-loaded pivotable blocking pin (40), which is operatively connected to the closure hook (16) of the locking member (15) in the folded-down position (**B**) of the folding top (3), is attached locally to a transversely extending support frame (36) on the body arranged in front of the swung-back folding top (3).

3. A folding top according to Claims 1 and 2, **characterized in that** the arresting device (35) comprises only a closure hook (16) and a blocking pin (40) which extend in the region of a longitudinal median plane (**C-C**) of the vehicle.

4. A folding top according to Claims 1 to 3, **characterized in that** a protruding projection (43), cooperating in the folded-down position (**B**) of the folding top (3) with a correspondingly formed upper end area (44) of the blocking pin (40) in a positively locking manner, is formed locally on the closure hook (16).

5. A folding top according to Claim 4, **characterized in that** the projection (43) is provided on a lower end area of the closure hook (16), namely on the side remote from a hook portion (25) of the closure hook (16).

6. A folding top according to Claims 1 and 2, **characterized in that** projecting centring members (27), cooperating in the folded-down position (**B**) of the folding top (3) with correspondingly formed abutments (45) on the body, are provided on the front, dimensionally rigid portion (14) of the folding top on areas situated laterally on the outside.

7. A folding top according to Claim 6, **characterized in that** the trough-shaped abutments (45) are arranged on the transversely extending support frame (36) on the body.

8. A folding top according to one or more of the preceding Claims, **characterized in that** the closure hook (16) is driven by a motor.

## Revendications

1. Capote pour un véhicule, notamment un cabriolet, qui est immobilisée dans sa position de fermeture contre le cadre 4 adjacent du pare-brise, au moyen d'un dispositif de verrouillage (12), et qui après déverrouillage du dispositif de verrouillage (12) est déplaçable dans une position de rangement à l'arrière, le dispositif de verrouillage (12) comprenant un organe de verrouillage (15), disposé sur une partie avant de la capote, avec un crochet de fermeture (16) ainsi qu'au moins un dispositif de centrage, agissant entre la capote (3) et le cadre (4) du pare-brise, avec des éléments de centrage (27) saillants, disposés sur la partie avant de la capote, caractérisée en ce que dans sa position de rangement B rabattue à l'arrière, la capote (3) est fixée au moyen d'un dispositif de blocage (35), l'organe de verrouillage (15), disposé sur la partie avant (14) de la capote, avec le crochet de fermeture (16) et/ou les éléments de centrage (27) saillants, également prévus sur la partie (14) de la capote, formant en même temps des éléments fonctionnels du dispositif de blocage (35) arrière.

2. Capote selon la revendication 1, caractérisée en ce que sur un cadre de support (36) transversal, côté carrosserie, situé devant la capote (3) rabattue, il est appliqué localement un verrou de blocage (40) pivotable, soumis à l'action d'un ressort, qui est en liaison active avec le crochet de fermeture (16) de l'organe de verrouillage (15), en position de rangement (B) de la capote (3).

3. Capote selon les revendications 1 et 2, caractérisée en ce que le dispositif de blocage (35) comprend uniquement un crochet de fermeture (16) et un verrou de blocage (40) qui s'étendent dans la zone d'un plan médian longitudinal (C-C) du véhicule.

4. Capote selon les revendications 1 à 3, caractérisée en ce que sur le crochet de fermeture (16) est formé localement un ergot (43) saillant qui, en position de rangement (B) de la capote (3), coopère par complémentarité de forme avec une zone terminale supérieure (44) formée en correspondance du verrou de blocage (40).

5. Capote selon la revendication 4, caractérisée en ce que l'ergot est prévu dans une zone terminale inférieure du crochet de fermeture (16) et ce sur le côté tourné à l'opposé d'une partie (23) du crochet de fermeture (16).

6. Capote selon les revendications 1 et 2, caractérisée en ce que sur la partie avant (14) rigide de la capote, sont prévus, dans des zones situées latéralement à l'extérieur, des éléments de centrage (27) saillants qui coopèrent avec des contre-paliers (45) côté carrosserie, formés en correspondance, en position de rangement (B) de la capote (3).

7. Capote selon la revendication 6, caractérisée en ce que les contre-paliers (45) en forme d'auge sont disposés sur le cadre de support (36) transversal côté carrosserie.

8. Capote selon une ou plusieurs des revendications précédentes, caractérisée en ce que le crochet de fermeture (16) est entraîné au moyen d'un moteur.
